(19) Europäisches Patentamt
European Patent Office
Office européen des brevets

(11) Veröffentlichungsnummer : **0 036 512**
**B1**

(12) # EUROPÄISCHE PATENTSCHRIFT

(45) Veröffentlichungstag der Patentschrift : **13.06.84**

(51) Int. Cl.³ : **C 09 B 29/085**, C 09 B 43/42// D06P1/18

(21) Anmeldenummer : **81101484.4**

(22) Anmeldetag : **02.03.81**

(54) **Wasserunlösliche Azofarbstoffe, ihre Herstellung und Verwendung.**

(30) Priorität : **13.03.80 DE 3009635**

(43) Veröffentlichungstag der Anmeldung : **30.09.81 Patentblatt 81/39**

(45) Bekanntmachung des Hinweises auf die Patenterteilung : **13.06.84 Patentblatt 84/24**

(84) Benannte Vertragsstaaten : **BE CH DE FR GB IT LI**

(56) Entgegenhaltungen :
**DE-A- 1 959 777**
**DE-A- 2 928 432**
**FR-A- 2 071 945**
**FR-A- 2 193 062**
**FR-A- 2 307 020**
**Die Akte enthält technische Angaben, die nach dem Eingang der Anmeldung eingereicht wurden und die nicht in dieser Patentschrift enthalten sind.**

(73) Patentinhaber : **CASSELLA Aktiengesellschaft**
**Hanauer Landstrasse 526**
**D-6000 Frankfurt am Main 61 (DE)**

(72) Erfinder : **Bühler, Ulrich, Dr.**
**Nidderauer Strasse 13**
**D-6369 Schöneck 1 (DE)**
Erfinder : **Cornelius, Dieter, Dr.**
**Grundstrasse 9**
**D-6100 Darmstadt (DE)**
Erfinder : **Löwenfeld, Rudolf, Dr.**
**Quellenweg 2**
**D-6072 Dreieich (DE)**
Erfinder : **Kosubek, Uwe**
**Am Vogelanger 28**
**D-6087 Büttelborn (DE)**
Erfinder : **Hähnle, Reinhard**
**Kastanienweg 7a**
**D-6240 Königstein 3 (DE)**
Erfinder : **Schickfluss, Rudolf, Dr.**
**Luisenstrasse 37**
**D-6233 Kelkheim/Ts. (DE)**

(74) Vertreter : **Urbach, Hans-Georg, Dr.**
**Hanauer Landstrasse 526**
**D-6000 Frankfurt am Main 61 (DE)**

**EP 0 036 512 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft wertvolle, neue, von ionogenen Gruppen freie wasserunlösliche Azofarbstoffe der allgemeinen Formel I :

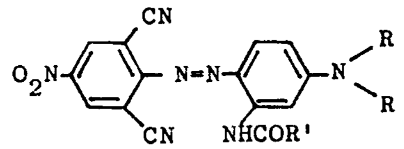

(I)

in welcher

R lineares Alkyl mit 2 bis 4 C-Atomen

R' lineares Alkyl mit 3 bis 5 C-Atomen und Isopropyl bedeuten.

Bevorzugt sind solche Farbstoffe der allgemeinen Formel I, in denen R' n-Propyl oder i-Propyl bedeutet.

Besonders bevorzugt ist der Farbstoff der allgemeinen Formel I, in der R Ethyl und R' n-Propyl bedeuten sowie der Farbstoff der allgemeinen Formel I, in der R Ethyl und R' i-Propyl bedeuten.

In der DAS 1 963 735 wird der Farbstoff der Formel

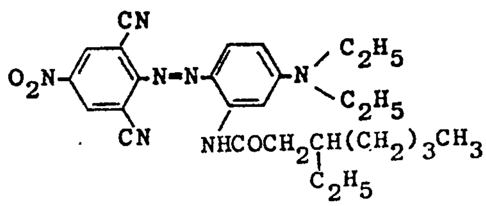

beschrieben. Dieser Farbstoff liefert nur relativ farbschwache Färbungen und Drucke.

Der im DP 1 290 915 beschriebene Farbstoff der Formel

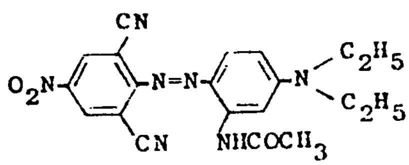

liefert zwar farbstarke Färbungen und Drucke. Er zeigt jedoch insbesondere beim HT-Färben eine eklatante Temperaturempfindlichkeit, d. h. er baut bei 125 °C deutlich schwächer auf als bei 130 °C und zieht dabei schlechter aus.

Diese Temperaturempfindlichkeit ist weitgehend behoben bei den Farbstoffmischungen, die in der DAS 2 234 465 beschrieben sind. Diese Farbstoffmischungen besitzen in der Regel ein besseres Ziehvermögen als jeder Einzelfarbstoff, aus dem diese Mischung eingestellt ist.

Derartige Farbstoffmischungen haben jedoch in der Herstellung und Verwendung deutliche Nachteile gegenüber Einzelfarbstoffen : Schwierigkeiten treten auf beispielsweise bei der Einstellung des Mischungsverhältnisses, beim Finish und beim Abnuancieren.

Im Hinblick auf die Schwierigkeiten, die mit den obengenannten, vergleichbaren bekannten Farbstoffen und deren Mischungen auftreten war es nicht vorherzusehen und sehr überraschend, daß die erfindungsgemäßen Farbstoffe der Formel I als Einzelfarbstoffe ein Ziehvermögen besitzen, das jenes der Farbstoffmischungen der DAS 2 234 465 übertrifft.

Die Herstellung der erfindungsgemäßen Azofarbstoffe erfolgt dadurch, daß man Azofarbstoffe der Formel II

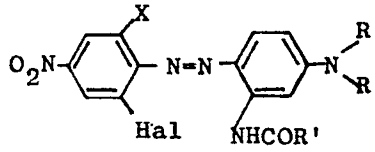

(II)

in welcher R und R' die vorstehenden Bedeutungen haben, X Cyan oder Hal und Hal ein Halogenatom, insbesondere Chlor oder Brom bedeutet, in an sich bekannter Weise, z. B. nach den Angaben der DOS 1 809 920, 1 809 921, der Brit. Pat. 1 184 825, der DAS 1 544 563, der DOS 2 310 745, der DAS 24 56 495, der DAS 26 10 675, der DOS 27 24 116, der DOS 27 24 117, der DOS 28 34 137, der DOS 2 341 109, der US Patentschrift 3 821 195, der DOS 2 715 034 oder der DOS 2 134 896 einer

nukleophilen Austauschreaktion unterwirft, wobei als nucleophiles Agenz das Cyanidion $CN^{\ominus}$ eingesetzt wird.

Als Lösungsmittel für die Austauschreaktion werden inerte organische Lösungsmittel, wie z. B. Nitrobenzol oder Glycol- oder Diglycol-mono-methyl oder monoethyläther oder Mischungen solcher Lösungsmittel untereinander und mit tertiären organischen Stickstoffbasen, dipolare aprotische Lösungsmittel wie z. B. Methylpyrrolidon, Pyridin, Dimethylformamid oder Dimethylsulfoxyd, Dicyandialkylthioäther, Wasser oder wässrige Systeme bestehend aus Wasser und einem mit Wasser unmischbaren (z. B. Nitrobenzol) organischen Lösungsmittel vorzugsweise in Gegenwart eines Netz- bzw. Dispergiermittels oder eines bekannten Phasentransferkatalysators oder aus Wasser und einem wasserlöslichen, inerten organischen Lösungsmittel wie Äthylenglycol oder Dimethylformamid eingesetzt.

Günstig wirkt sich auf die Austauschreaktion auch die Anwesenheit von organischen, basischen Stickstoffverbindungen, wie z. B. Pyridin und Pyridinbasen aus.

Die Reaktionstemperaturen liegen normalerweise zwischen 20 und 150 °C.

Das nucleophile Agenz $CN^{\ominus}$ wird der Reaktion in Form eines ggf. komplexen Metallcyanids wie z. B. eines Alkali- oder Erdalkalicyanids, Zinkcyanids, Alkalicyanozinkats oder -ferrats, vorzugsweise aber in Form von Kupfer-I-cyanid oder eines Kupfer-I-cyanid ausbildenden Systems zugefügt. Besonders bewährt ist der Einsatz einer Kombination von Alkalicyanid mit Kupfer-I-cyanid, wobei das Mengen-Verhältnis von Alkali und Kupfersalz in weiten Grenzen variiert werden kann.

Der gängige Bereich des Alkalicyanid/Kupfer-I-cyanid-Verhältnisses liegt bei 5 : 95 bis 95 : 5. Auch außerhalb dieser Grenzen ist noch die positive gegenseitige Beeinflussung der Komponenten feststellbar. Selbstverständlich ist es auch möglich, das Kupfer-I-cyanid seinerseits durch ein Kupfer-I-cyanid ausbildendes System wie z. B. eine Kombination von Alkalicyanid mit einem anderen Kupfersalz, vorzugsweise Kupfer-I-salz wie z. B. einem Kupfer-I-halogenid zu ersetzen.

Die zur Herstellung der erfindungsgemäßen Farbstoffe erforderlichen Farbstoffe der Formel II können dadurch hergestellt werden, daß eine Diazoniumverbindung eines aromatischen Amins der allgemeinen Formel III

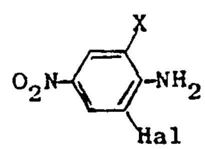 (III)

mit einer Kupplungskomponente der allgemeinen Formel IV

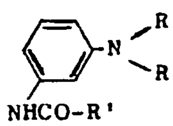 (IV)

worin R und R' die oben angegebenen Bedeutungen haben, gekuppelt wird.

Aus den Aminen der allgemeinen Formel III werden die Diazoniumverbindungen in an sich bekannter Weise durch Einwirkung von salpetriger Säure oder anderen Nitrosoniumionen bildenden Systemen in einem sauren wäßrigen Medium, einer Niederalkancarbonsäure, wie z. B. Ameisensäure, Essigsäure oder Propionsäure oder deren Mischungen oder einem organischen Lösungsmittel bei Temperaturen von 0 bis 40 °C erhalten.

Die Kupplung erfolgt ebenfalls in an sich bekannter Weise durch Vereinigung der erhaltenen Diazolösung mit einer Lösung der Kupplungskomponente bei Temperaturen von 0 bis 40 °C, vorzugsweise 0 bis 25 °C in einem geeigneten Lösungsmittel wie z. B. einem Alkanol mit 1 bis 4 C-Atomen oder Dimethylformamid, vorzugsweise in mit Schwefelsäure, Salzsäure oder Phosphorsäure angesäuertem Wasser oder einer ggf. wasserhaltigen Niederalkancarbonsäure oder einem Niederalkancarbonsäuregemisch ggf. auch in Gegenwart eines mit Wasser begrenzt mischbaren Alkanols. In manchen Fällen kann es zweckmäßig sein, während der Kupplung den pH Wert abzupuffern, z. B. durch Zugabe von Natriumacetat. Die Kupplung ist nach einigen Stunden beendet und der Farbstoff der Formel II kann wie üblich isoliert und getrocknet werden.

Die benötigten Kupplungskomponenten der Formel IV lassen sich aus bekannten Handelsprodukten nach bekannten Verfahren herstellen.

Die erfindungsgemäßen Azofarbstoffe sind einzeln oder im Gemisch untereinander oder auch im Gemisch mit anderen Dispersionsfarbstoffen vorzüglich zum Färben und Bedrucken von hydrophoben synthetischen Materialien geeignet.

Als hydrophobe synthetische Materialien kommen in Betracht: Cellulose-2 1/2-Acetat, Cellulosetriacetat, Polyamide und besonders hochmolekulare Polyester, wie z. B. Polyäthylenglykol terephthalat.

Vorzugsweise werden die erfindungsgemäßen Farbstoffe zum Färben und Bedrucken von Materialien aus hochmolekularen Polyestern, insbesondere solchen auf Basis von Polyäthylenglykolterephthalaten oder deren Mischungen mit natürlichen Faserstoffen oder von Materialien aus Zellulosetriacetat eingesetzt. Diese Materialien können in Form von flächen- oder fadenförmigen Gebilden vorliegen und z. B. zu Garnen oder gewebten oder gestrickten Textilstoffen verarbeitet sein. Das Färben des genannten Fasergutes mit den erfindungsgemäßen Farbstoffen erfolgt in an sich bekannter Weise, vorzugsweise aus wäßriger Suspension, gegebenenfalls in Gegenwart von Carriern, zwischen 80 bis ca. 100 °C nach dem Auszichverfahren oder nach dem HT-Verfahren im Färbeautoklav bei 110 bis 140 °C, sowie nach dem sogenannten Thermofixierverfahren, wobei die Ware mit der Färbeflotte geklotzt und anschließend bei etwa 180 bis 230 °C fixiert wird. Das Bedrucken der genannten Materialien kann so durchgeführt werden, daß die mit erfindungsgemäße Farbstoffe enthaltenden Druckpasten bedruckte Ware zur Fixierrung des Farbstoffs, gegebenenfalls in Gegenwart eines Carriers, bei Temperaturen zwischen 80 bis 230 °C mit HT-Dampf, Druckdampf oder Trockenhitze behandelt wird. Man erhält auf diese Weise sehr farbstarke blaue Färbungen und Drucke mit sehr guten Echtheitseigenschaften, insbesondere einer sehr guten Licht- und Sublimierechtheit.

Die erfindungsgemäßen Farbstoffe eignen sich auch zum Färben der vorstehend aufgeführten hydrophoben Materialien aus organischen Lösungsmitteln nach den hierbei bekannten Methoden und zum Färben in der Masse.

In den bei obigen Applikationen eingesetzten Färbeflotten und Druckpasten sollen die erfindungsgemäßen Farbstoffe in möglichst feiner Verteilung vorliegen.

Die Feinverteilung der Farbstoffe erfolgt in an sich bekannter Weise dadurch, daß man den in der Fabrikation anfallenden Farbstoff zusammen mit Dispergiermitteln in einem flüssigen Medium, vorzugsweise in Wasser, aufschlämmt und die Mischung der Einwirkung von Scherkräften aussetzt, wobei die ursprünglich vorhandenen Farbstoff-Teilchen mechanisch so weit zerkleinert werden, daß eine optimale spezifische Oberfläche erreicht wird und die Sedimentation des Farbstoffs möglichst gering ist. Die Teilchengrößen der Farbstoffe liegt im allgemeinen zwischen 0,5 und 5 μ, vorzugsweise bei etwa 1 μ.

Die bei dem Mahlvorgang mitverwendeten Dispergiermittel können nichtionogen oder anionaktiv sein. Nichtionogene Dispergiermittel sind z. B. Umsetzungsprodukte von Alkylenoxiden wie z. B. Ethylen- oder Propylenoxid mit alkylierbaren Verbindungen wie z. B. Fettalkoholen, Fettaminen, Fettsäuren, Phenolen, Alkylphenolen und Carbonsäure-amiden. Anionaktive Dispergiermittel sind beispielsweise Ligninsulfonato, Alkyl- oder Alkylarylsulfonate oder Alkyl-aryl-Polyglycoläthersulfate.

Die so erhaltenen Farbstoffzubereitungen sollen für die meisten Anwendungsweisen gießbar sein. Der Farbstoff- und Dispergiermittelgehalt ist daher in diesen Fällen limitiert. Im allgemeinen werden die Dispersionen auf einen Farbstoffgehalt bis zu 30 Gewichtsprozent und einen Dispergiermittelgehalt bis zu etwa 25 % eingestellt. Aus ökonomischen Gründen werden Farbstoffgehalte von 15 Gewichtsprozent meist nicht unterschritten.

Die Dispersionen können auch noch weitere Hilfsmittel enthalten, z. B. solche, die als Oxydationsmittel wirken, wie z. B. Natrium-m-nitrobenzolsulfonat oder fungicide Mittel wie z. B. Natrium-o-phenylphenolat und Natrium-pentachlorphenolat.

Die so erhaltenen Farbstoffdispersionen können sehr vorteilhaft zum Ansatz von Druckpasten und Färbeflotten verwendet werden. Besondere Vorteile bieten sie z. B. bei den Kontinue-Verfahren, bei denen durch kontinuierliche Farbstoff-Einspeisung in die laufende Apparatur die Farbstoffkonzentration der Färbeflotten konstant gehalten werden muß.

Für gewisse Anwendungsbereiche werden Pulvereinstellungen bevorzugt. Diese Pulver enthalten den Farbstoff, Dispergiermittel und andere Hilfsmittel wie z. B. Netz-, Oxydations-, Konservierungs- und Entstaubungsmittel.

Ein bevorzugtes Herstellungsverfahren für pulverförmige Farbstoffzubereitungen besteht darin, daß den oben beschriebenen flüssigen Farbstoffdispersionen die Flüssigkeit entzogen wird, z. B. durch Vakuumtrocknung, Gefriertrocknung durch Trocknung auf Walzentrocknern vorzugsweise aber durch Sprühtrocknung.

Zur Herstellung der Färbeflotten werden die erforderlichen Mengen der Farbstoffeinstellungen, die gemäß den obigen Angaben hergestellt wurden, mit dem Färbemedium, vorzugsweise mit Wasser so weit verdünnt, daß sich für die Färbung ein Flottenverhältnis von 1 : 5 bis 1 : 50 ergibt. Zusätzlich werden den Flotten im allgemeinen weitere Färbereihilfsmittel, wie Dispergier-, Netz- und Fixierhilfsmittel zugesetzt.

Soll der Farbstoff für den Textildruck herangezogen werden, so werden die erforderlichen Mengen der Farbstoffeinstellungen zusammen mit Verdickungsmitteln wie z. B. Alkali-Alginaten oder dergleichen und gegebenenfalls weiteren Zusätzen wie z. B. Fixierbeschleunigern, Netzmitteln und Oxydationsmitteln zu Druckpasten verknetet.

Die Erfindung wird durch die folgenden Beispiele näher erläutert. Prozentangaben sind Gewichtsprozente.

## Beispiel 1

18,0 g Kupfer-I-cyanid werden mit 2,0 g Natriumcyanid in 150 ml Dimethylformamid 15 min. bei Raumtemperatur gerührt. Dann werden 54,1 g des Farbstoffs der Formel

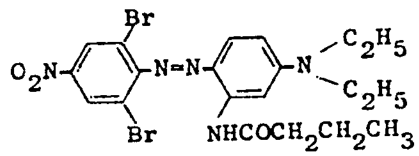

eingetragen und es wird 15 min. auf 110 °C bis 115 °C erhitzt. Man läßt kalt rühren, saugt ab, wäscht mit 20 ml Dimethylformamid, Wasser, 5 %igem wäßrigem Ammoniak und wieder mit Wasser und trocknet unter vermindertem Druck.

Auf diese Weise erhält man den Farbstoff der Formel

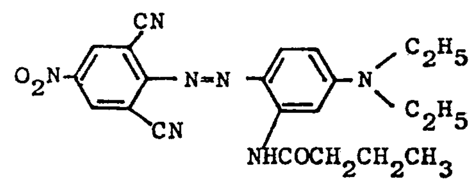

der bei 189-191 °C schmilzt.

1,0 g des so erhaltenen Farbstoffs wird in feindispergierter Form in 2 000 g Wasser eingerührt. Die Dispersion wird mit Essigsäure auf einen pH-Wert von 5-6 eingestellt und mit 4,0 g Ammoniumsulfat und 2,0 g eines handelsüblichen Dispergiermittels auf Basis eines Naphthalinsulfonsäure-Formaldehyd-Kondensats versetzt.

In die so erhaltene Färbeflotte bringt man 100 g eines Polyestergewebes auf Basis von Polyethylenglykolterephthalat ein und färbt 1 Stunde bei 130 °C.

Nach anschließendem Spülen, reduktiver Nachbehandlung mit einer 0,2 %igen Natriumdithionitlösung während 15 Minuten bei 70 bis 80 °C, Spülen und Trocknen, erhält man eine farbstarke blaue Färbung mit sehr guten coloristischen Eigenschaften.

Wird unter sonst gleichen Bedingungen bei 125 °C gefärbt, erhält man eine Färbung gleicher Farbstärke. Die Nachzüge bei 135 °C sind farblos.

Beispiel 2

Werden wie in Beispiel 1 beschrieben anstelle des Farbstoffs der Formel II 54,1 g des Farbstoffs der Formel IV

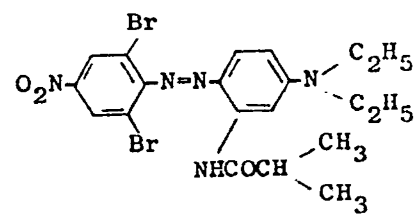

(IV)

umgesetzt und isoliert, so erhält man den Farbstoff der Formel V

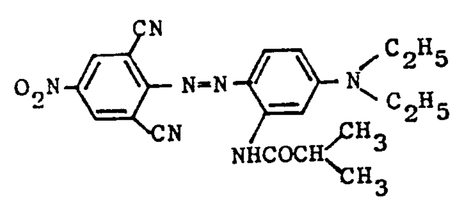

der bei 216-217 °C schmilzt.

20,0 g des so erhaltenen Farbstoffs werden in feiner Verteilung einer Druckpaste, die 45,0 g Johannisbrotkernmehl, 6,0 g 3-Nitrobenzolsulfonsaures Natrium und 3,0 g Zitronensäure auf 1 000 g enthält, einverleibt. Wird Polyester mit dieser Druckpaste bedruckt, das bedruckte Gewebe nach dem Trocknen 15 Min. bei 1,5 atü Dampfdruck gedämpft, gespült, geseift, erneut gespült und getrocknet, so erhält man einen farbstarken blauen Druck von sehr guten coloristischen Eigenschaften.

In der nachstehenden Tabelle sind weitere erfindungsgemäße Farbstoffe angegeben, die auf Polyestermaterialien ebenfalls farbstarke blaue Färbungen bzw. Drucke mit ebenfalls sehr guten coloristischen Eigenschaften liefern.

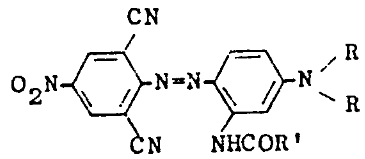

| Bsp. | R | R' | Fp (°C) |
|---|---|---|---|
| 3 | $C_2H_5$ | $n\text{-}C_4H_9$ | 204-205 |
| 4 | $C_2H_5$ | $n\text{-}C_5H_{11}$ | 194-196 |
| 5 | $C_3H_7$ | $i\text{-}C_3H_7$ | 201-203 |
| 6 | $C_3H_7$ | $n\text{-}C_3H_7$ | 187-190 |
| 7 | $C_3H_7$ | $n\text{-}C_4H_9$ | 195-197 |
| 8 | $C_3H_7$ | $n\text{-}C_5H_{11}$ | 184-185 |
| 9 | $C_4H_9$ | $i\text{-}C_3H_7$ | 198-200 |
| 10 | $C_4H_9$ | $n\text{-}C_3H_7$ | 181-183 |
| 11 | $C_4H_9$ | $n\text{-}C_4H_9$ | 175-178 |
| 12 | $C_4H_9$ | $n\text{-}C_5H_{11}$ | 170 |

**Ansprüche**

1. Azofarbstoffe der allgemeinen Formel I

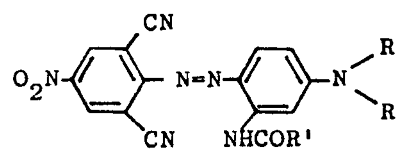

(I)

in welcher
R lineares Alkyl mit 2 bis 4 C-Atomen,
R' lineares Alkyl mit 3 bis 5 C-Atomen und Isopropyl bedeuten.

2. Azofarbstoffe nach Anspruch 1, dadurch gekennzeichnet, daß R' n-Propyl oder i-Propyl bedeutet.

3. Azofarbstoff der Formel

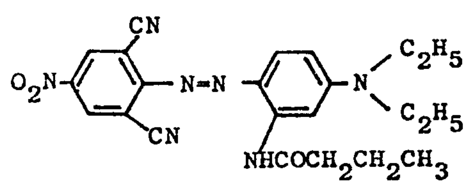

4. Azofarbstoff der Formel

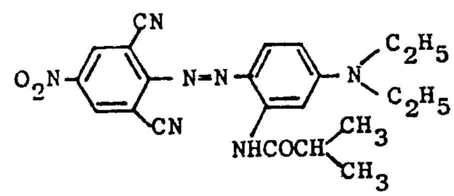

5. Farbstoffzubereitungen zur Herstellung von Farbflotten und Druckpasten für hydrophobe Fasermaterialien, bestehend aus einem fein verteilten wasserunlöslichen Azofarbstoff sowie üblichen

Dispergier- und Konservierungsmitteln und Wasser oder einem organischen Lösungsmittel, dadurch gekennzeichnet, daß sie als Azofarbstoff einen Farbstoff der Ansprüche 1 bis 4 enthalten.

6. Verfahren zur Herstellung von wasserunlöslichen Azofarbstoffen der in Anspruch 1 angegebenen allgemeinen Formel I, dadurch gekennzeichnet, daß man Farbstoffe der Formel II

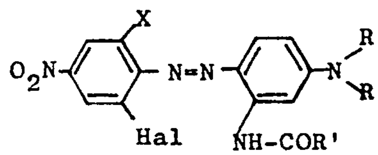

(II)

in welcher R und R′ die in den Ansprüchen 1 bis 4 angegebenen Bedeutungen haben, X Cyan oder Hal und Hal ein Halogenatom, insbesondere Chlor oder Brom bedeutet, in an sich bekannter Weise einer nukleophilen Austauschreaktion, wobei als nukleophiles Agenz das Cyanidion $CN^{\ominus}$ eingesetzt wird, unterwirft.

7. Verwendung der Farbstoffe der Ansprüche 1 bis 4 und der Farbstoffzubereitungen des Anspruchs 5 zum Färben und Bedrucken von hydrophoben Fasermaterialien.

**Claims**

1. Azo dyestuffs of the general formula I

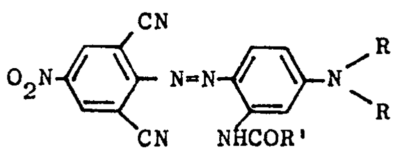

(I)

in wich

R denotes linear alkyl having 2 to 4 C atoms and

R′ denotes linear alkyl having 3 to 5 C atoms and isopropyl.

2. Azo dyestuffs according to Claim 1, characterised in that R′ denotes n-propyl or i-propyl.

3. Azo dyestuff of the formula

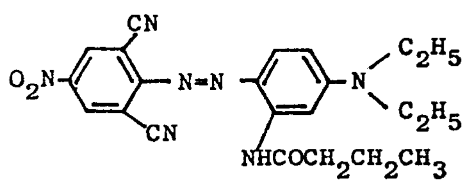

4. Azo dyestuff of the formula

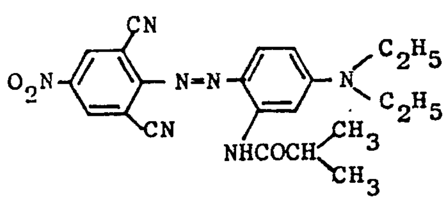

5. Dyestuff preparations for the production of dye liquors and printing pastes for hydrophobic fibre materials, consisting of a finely divided, water-insoluble azo dyestuff and also customary dispersing agents and preservatives and water or an organic solvent, characterised in that they contain, as the azo dyestuff, a dyestuff of Claims 1 to 4.

6. Process for the manufacture of water-insoluble azo dyestuffs of the general formula I indicated in Claim 1, characterised in that dyestuffs of the formula II

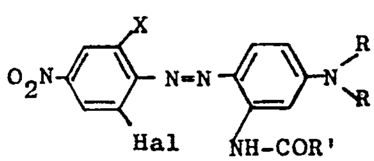

(II)

in which R and R′ have the meanings indicated in Claims 1 to 4, X denotes cyano or Hal and Hal denotes a halogen atom, in particular chlorine or bromine, are subjected to a nucleophilic exchange reaction in a manner which is in itself known, the nucleophilic agent employed being the cyanide ion $CN^{\ominus}$.

7. Use of the dyestuffs of Claims 1 to 4 and of the dyestuff preparations of Claim 5 for dyeing and printing hydrophobic fibre materials.

**Revendications**

1. Colorants azoïques qui répondent à la formule générale I

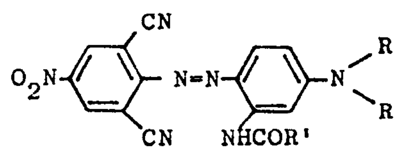

(I)

dans laquelle

R représente un radical alkyle linéaire contenant de 2 à 4 atomes de carbone et

R′ représente un radical alkyle linéaire contenant de 3 à 5 atomes de carbone ou un radical isopropyle.

2. Colorants azoïques selon la revendication 1, caractérisés en ce que R′ représente le radical n-propyle ou le radical isopropyle.

3. Colorant azoïque de formule

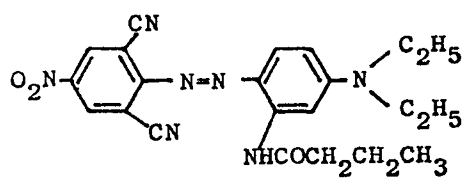

4. Colorant azoïque de formule

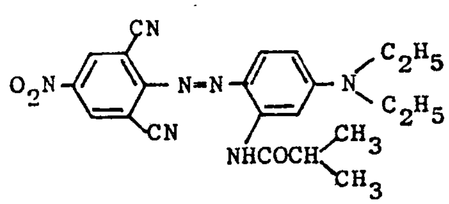

5. Compositions de colorant pour la préparation de bains de teinture et de pâtes d'impression pour matières fibreuses hydrophobes, compositions qui sont constituées d'un colorant azoïque insoluble dans l'eau, sous une forme finement divisée, ainsi que de dispersants et conservateurs usuels et d'eau ou d'un solvant organique et qui sont caractérisées en ce qu'elles contiennent, comme colorant azoïque, un colorant selon l'une quelconque des revendications 1 à 4.

6. Procédé de préparation de colorants azoïques insolubles dans l'eau qui répondent à la formule générale I indiquée à la revendication 1, procédé caractérisé en ce qu'on soumet des colorants répondant à la formule II :

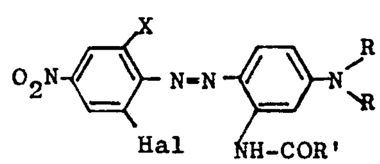

(II)

dans laquelle R et R′ ont les significations données dans les revendications 1 à 4, X représente un radical cyano ou un atome d'halogène et Hal représente un atome d'halogène, plus particulièrement de chlore ou de brome, de manière connue, à une réaction d'échange nucléophile, en utilisant, comme agent nucléophile, l'ion cyanure $CN^{\ominus}$.

7. Application des colorants selon l'une quelconque des revendications 1 à 4 et des compositions de colorant selon la revendication 5 à la teinture et à l'impression de matières fibreuses hydrophobes.